# EUROPÄISCHE PATENTSCHRIFT

(11) **EP 0 740 770 B1**
(45) Veröffentlichungstag und Bekanntmachung des Hinweises auf die Patenterteilung: **28.04.1999**
(21) Anmeldenummer: 95905538.5
(22) Anmeldetag: 12.01.1995
(51) Int. Cl.: G01B 11/08, G01B 11/24

(54) **VERFAHREN UND VORRICHTUNG ZUR VERMESSUNG VON EXZENTERDREHTEILEN**
PROCESS AND DEVICE FOR MEASURING ECCENTRIC ROTARY COMPONENTS
PROCEDE ET DISPOSITIF POUR LA MESURE D'ELEMENTS DE ROTATION EXCENTRIQUES

(30) Priorität: 18.01.1994 DE 4401238
(43) Veröffentlichungstag der Anmeldung: 06.11.1996
(73) Patentinhaber: STEINHEIL INDUSTRIELLE MESSTECHNIK GmbH, 85737 Ismaning (DE)
(72) Erfinder: DASSLER, Hans-Ulrich, D-85764 Oberschlei heim (DE); HAAS, Rüdiger, D-85649 Faistenhaar (DE); LANG, Johann, D-84069 Schierling (DE)
(86) Internationale Anmeldenummer: DE9500036
(87) Internationale Veröffentlichungsnummer: WO9519542

(56) Entgegenhaltungen:
- DE-A- 4 143 187
- PATENT ABSTRACTS OF JAPAN vol. 9, no. 232 (P-389) (1955) 18. September 1985 & JP,A,60 088 307 (SHINGIJIYUTSU KAIHATSU JIGIYOUDAN) 18. Mai 1985

## Beschreibung

Die Erfindung betrifft ein Verfahren zur Vermessung von Exzenterdrehteilen eines Meßobjekts, wobei das Meßobjekt drehbar gelagert ist und sich um eine Drehachse dreht und eine Meßebene senkrecht zur Drehachse definiert ist, worin das zu messende Teil des Meßobjekts mit einem von einer Strahlenquelle ausgehenden parallelen Strahlenbündel bestrahlt wird und mit einer Detektionseinrichtung, um die von dem Meßobjekt und der Strahlenquelle erzeugte Schattenbildprojektion eines in der Meßebene liegenden Querschnitts durch das Meßobjekt zu erfassen und eine Vorrichtung, um das Verfahren durchzuführen.

Eine Vorrichtung und ein Verfahren dieser Art sind durch die internationale Veröffentlichung WO86/07442 bekanntgeworden.

Das bekannte Verfahren und die bekannte Vorrichtung sind geeignet, um Abmessungen eines länglichen Prüfobjekts zu ermitteln. Ein Opto-Elektronischer Meßplatz wird zur automatischen Abmessungskontrolle von Außenarehteilen vorgeschlagen, bei welchem das Prüfobjekt von einer unterliegenden linienförmigen Strahlenquelle beleuchtet wird, um eine Abbildung zwei diametral gegenüberliegender Konturpunkte auf zwei Fotodioden-Zeilen zu erzeugen. Die daraus folgenden Intensitätssprünge ergeben die beiden Konturpunkte und von dem elektrisch ermittelten Abstand zwischen den beiden Diodenzellen läßt sich der Wellendurchmesser ermitteln.

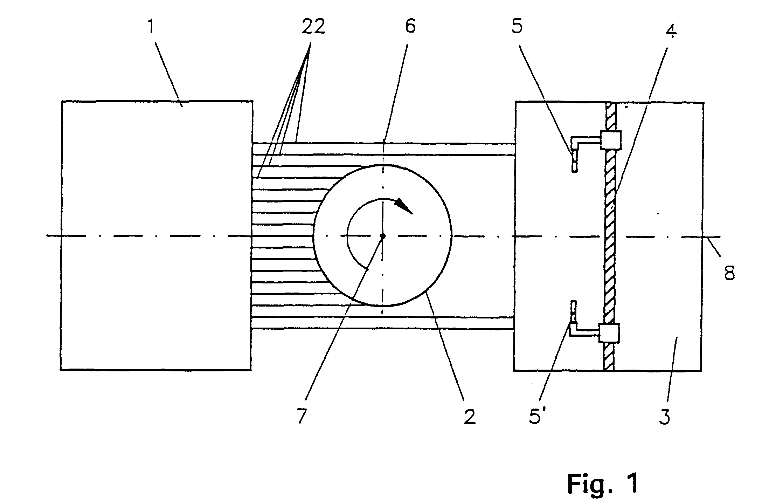

Fig. 1 zeigt das Grundprinzip der Messung gemäß dem Stand der Technik. Eine Strahlenquelle 1 erzeugt ein aus parallelen Strahlen bestehendes Strahlenbündel 22, das ein zu messendes Meßobjekt 2 entlang einer optischen Achse 8 ausleuchtet. Das längliche Meßobjekt 2 rotiert um eine Drehachse, die durch das Zentrum 7 senkrecht zur Zeichenebene läuft. Eine Detektoreinrichtung 3 besteht aus zwei beabstandeten Detektorelementen 5, 5', deren Abstand zueinander mittels einer Positionierungseinrichtung 4 bewegbar ist. Da das Strahlenbündel 22 aus parallelen Strahlen besteht, erzeugt die Position des Strahlenbündels auf dem Detektor 5 ein Schattenbild mit einem Intensitätsprofil. Die erprobten Änderungen der Intensität im Bereich der Kanten des Meßobjekts erlauben, im Zusammenhang mit dem elektronisch ermittelten Abstand zwischen den beiden Detektor-Fotozeilen 5, 5', eine genaue Vermessung des Meßobjektes. Eine wiederholte Vermessung des Durchmessers während der Rotation ermöglicht eine Bestimmung der Rundheit des Meßobjekts. Bei einer ausgeführten Meßvorrichtung gemäß dem Stand der Technik betrug die beim Vermessen erzielte Auflösung einen Mikrometer für die Durchmesser-Meßkontrolle und 0,002 mm für die Längenkontrolle. Mit dieser Meßvorrichtung lassen sich Wellen im Durchmesserbereich von 7 bis 100 mm mit einer Länge von zwischen 200 und 700 mm vermessen.

Obwohl die vermessenen Durchmesser und Rundheiten sehr genau bestimmt werden können, hat das Verfahren und die Vorrichtung gemäß dem Stand der Technik den Nachteil, daß asymmetrische Meßteile nicht genau genug vermessen werden können, da das Rotieren eines solchen Teiles zu Ungenauigkeiten in der Messung führt.

Aufgabe der Erfindung ist es, eine Vorrichtung und ein Verfahren der obengenannten Art derart zu verbessern, daß auch Rotationsteile mit asymmetrischen Hublagestellen ausreichend genau meßbar sind.

Diese Aufgabe wird in dem Verfahren gemäß der Erfindung dadurch gelöst, indem die Drehachsenposition so zwischen der Detektionseinrichtung und dem Strahlenbündel eingestellt ist, daß das zu messende Exzenterdrehteil ausgeleuchtet wird und zunächst, bei stationärer Detektionseinrichtung, das maximale Auswanden eines Durchmessers des Exzenterdrehteils mittels einer Schattenbildprojektion an der Detektionseinrichtung erfaßt wird, daß ein Drehwinkel des Exzenterdrehteils ermittelt wird und daß die Detektionseinrichtung parallel zum Strahlenbündel derart mit der Drehwinkelposition synchronisiert und bewegt wird, daß der Abstand, parallel zum Strahlenbündel, zwischen der Detektionseinrichtung und dem rotierenden Exzenterdrehteil konstant gehalten wird.

Die Aufgabe der Erfindung wird gleichfalls durch eine Vorrichtung zur Durchführung des Verfahrens realisiert, die aufweist: eine Winkelerfassungsvorrichtung, um einen Drehwinkel des Exzenterteils zu ermitteln, eine Hubeinrichtung, die so ausgebildet ist, daß sie die Detektionseinrichtung parallel zum Strahlenbündel bewegen kann, eine Synchronisierungseinrichtung, die die Hubbewegung der Detektionseinrichtung in Abhängigkeit vom erfaßten Drehwinkel (α) des Exzenterteils mit der rotierenden Bewegung des Exzenterteils synchronisiert und einen Computer zum Speichern, Steuern und Auswerten, wobei die Detektionseinrichtung so bewegt wird, daß der Abstand, parallel zum Strahlenbündel, zwischen der Detektionseinrichtung und dem rotierenden Exzenterdrehteil konstant bleibt.

In dieser Weise wird die Aufgabe der vorliegenden Erfindung gelöst. Durch eine Erfassung der Winkellage des drehenden Exzenterdrehteils und durch eine Synchronisierung dieser Winkellage mit einer parallel zur Strahlenrichtung bewegbaren Lage der Detektoreinrichtung wird dafür gesorgt, daß die obengenannten Meßungenauigkeiten aufgrund der veränderbaren Position innerhalb der Vermessungsoptik vermieden werden. Während der Rotation beschreibt ein beliebiger Punkt auf dem zu messenden Exzenterteil, der einen gewissen konstanten Abstand von der Rotationsachse aufweist, eine sinusförmige Bewegung bezogen auf die optische Achse und dreht sich in einem Kreis um eine Exzenterdrehachse. Durch eine entsprechende sinusförmige Bewegung der Detektionseinrichtung bezüglich dem Rotationsteil kann ihr Abstand parallel zum Strahlenbündel zur Exzenterdrehachse konstant gehalten werden. Durch die Vermessung des Exzenterdrehteils an verschiedenen Winkelpositionen während der Rotation können verschiedene Projektionen von Schattenbildern erfaßt werden, wobei auch die Rundheit des zu messenden Exzenterdrehteils erfaßt werden kann.

Es ist besonders vorteilhaft, wenn das Verfahren dazu verwendet wird, um Kurbelwellen zu vermessen. Eine solche Verwendung hat den Vorteil, daß auch Präzisionsmessungen von Kurbelwellen automatisch und berührungslos durchgeführt werden können.

Es ist auch vorteilhaft, wenn das Verfahren durchgeführt wird, um Kurbelwellen mit einer Vielzahl von Exzenterdrehteilen mit einer Vielzahl von Drehwinkeln relativ zueinander zu vermessen. Eine Verwendung des Meßverfahrens für die Vermessung von solchen Kurbelwellen hat den Vorteil, daß auch Kurbelwellen mit einer komplizierten Zusammenstellung von Exzenterdrehteilen, die untereinander verschiedene Winkelstellen aufweisen, automatisch und berührungslos vermessen werden können.

Eine besonders vorteilhafte Ausführungsform der Vorrichtung, um das Verfahren durchzuführen, benutzt zwei Fotodiodenzeilen, um das Exzenterdrehteil zu vermessen. Diese Ausführungsform hat den Vorteil, daß die weit fortgeschrittene Technik von CCD-Kameras und Laser-Scannern in Anspruch genommen werden kann, wobei eine Vielzahl von individuellen Messungen pro Rotation durchgeführt werden können.

Bei einer Variation dieser Ausführungsform weist die Vorrichtung eine Positionierungseinrichtung auf, um den Abstand zwischen den zwei Fotodiodenzeilen einzustellen. Diese Variation hat den Vorteil, daß auch Exzenterdrehteile mit sehr verschiedenen Durchmessern durch die Anwendung der zwei einstellbaren Fotodiodenzeilen vermessen werden können.

Ein vorteilhaftes Ausführungsbeispiel der Vorrichtung zur Durchführung des Verfahrens, weist eine Positionierungseinrichtung auf, um die Detektoren transversal zum Strahlenbündel zu positionieren. Dieses Beispiel hat den Vorteil, daß verschiedene Kanten des rotierenden ExzenterDrehteils erfaßt werden können bei verschiedenen Drehwinkeln während der Rotation, so daß auch eine Rundheit der Exzenterdrehteile ermittelt werden kann.

Weitere Vorteile ergeben sich aus der Beschreibung und den beigefügten Abbildungen. Die verschiedenen Merkmale, die erläutert werden, können in anderen Ausführungsbeispielen entweder allein oder in beliebigen Kombinationen benutzt werden. Es zeigen:
- Fig. 1: eine kurze Beschreibung des Meßprinzips gemäß dem Stand der Technik;
- Fig. 2a: einen Querschnitt in einer Ebene senkrecht zur Drehachse eines zu messenden Exzenterdrehteils;
- Fig. 2b: eine Seitenansicht des zu messenden Drehteils gemäß Fig. 2a mit dazugehörenden Rotations- und Erfassungskomponenten;
- Fig. 3a: eine Seitenansicht in der Meßebene, wo das zu messende Exzenterteil auf der optischen Achse bei maximaler Entfernung von der Strahlenquelle liegt;
- Fig. 3b: eine Abbildung der Meßanordnung für den Fall, bei dem das zu messende Exzenterteil während der Rotation einen Winkel von 90° relativ zu Fig. 3a einnimmt.
- Fig. 3c: entspricht der Anordnung Fig. 3a und 3b aber für den Fall, wo das zu messende Exzenterdrehteil möglichst nahe an der Quelle auf der optischen Achse liegt;
- Fig. 4: eine schematische Darstellung der Verbindungen zwischen Steuerungskomponenten und den synchronisierten Teilen gemäß der Erfindung.

Fig. 1 beschreibt das Grundprinzip der Messung gemäß dem Stand der Technik. Eine Strahlenquelle 1 produziert ein im wesentlichen paralleles Strahlenbündel 22, das das zu messende Meßobjekt 2 derart bestrahlt, daß eine Schattenbildprojektion auf eine mit einem Detektor 5, 5' ausgerüstete Detektionseinrichtung 3 geschaffen wird. Die vertikale Lage des Detektors 5, 5' sowie der Abstand zwischen möglichen Detektorteilen 5, 5' ist anhand einer Transvers-Positionierungseinrichtung 4 eingestellt.

Die Rundheit des Meßobjekts 2 kann durch eine Drehung des Meßobjekts 2 um eine Drehachse, die senkrecht zur Zeichnungsebene durch das Drehzentrum 7 läuft, im Zusammenhang mit einer Auswertung der Intensitätssprünge im Detektor 5, 5' erfaßt werden. Eine optische Achse 8 definiert die parallele Laufrichtung des Strahlenbündels durch das Drehzentrum 7. Eine Transversachse 6 schneidet die optische Achse 8 in senkrechter Richtung durch das Drehzentrum 7.

Obwohl anhand des parallelen Strahlengangs des Strahlenbündels 22 die Meßergebnisse beispielsweise bezüglich dem Durchmesser des zu messenden Meßobjekts 2 gegenüber kleinen Verschiebungen in Richtung der optischen Achse weitgehend unempfindlich sind, verursachen große Verschiebungen des Meßobjektes entlang der optischen Achse optische Verzerrungen, die die Meßergebnisse verfälschen bzw. verschlechtern. Demzufolge ist es bei einer Durchführung einer Vermessung eines Meßobjekts mit einem Exzenterdrehteil zunächst nicht möglich, eine genaue Vermessung des Exzenterdrehteils durchzuführen ohne zusätzliche Maßnahmen zu unternehmen.

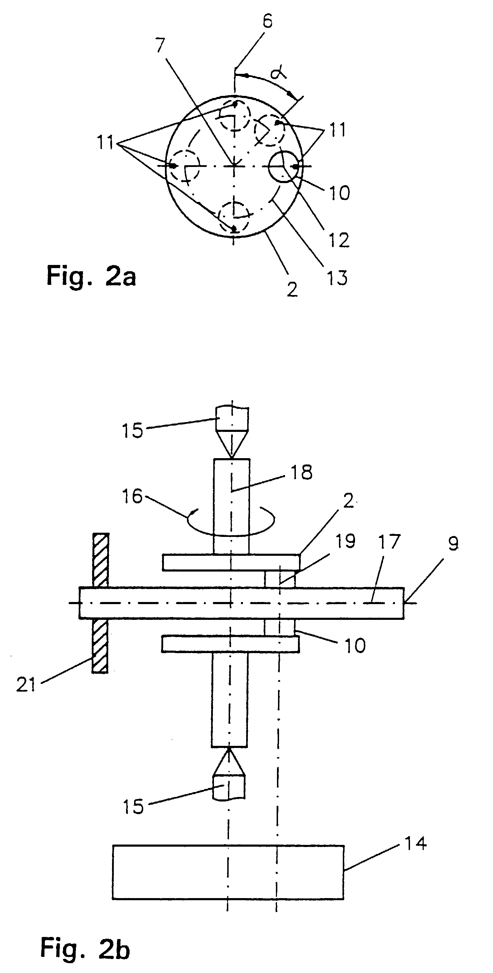

Fig. 2a zeigt einen Schnitt in der Meßebene entsprechend der Zeichenebene der Fig. 1 eines zu messenden Meßobjekts 2 mit einem Exzenterdrehteil. Das Exzenterdrehteil 10 dreht sich in diesem Ausführungsbeispiel um das Drehzentrum 7 auf einem Exzenterhubkreis 13. Bei vielen Fällen, beispielsweise im Falle einer Kurbelwelle beschreibt ein Punkt 11 am Rand des Exzenterdrehteils auch eine kreisförmige Bewegung um das Drehzentrum 7, währenddessen das Meßobjekt rotiert wird. Auf diese Weise weist das Exzenterdrehteil auch sein eigenes Exzenterdrehzentrum 12 auf, das wiederum ein Exzenterhubkreis 13 um das Drehzentrum 7 beschreibt. Während der Drehung weist das Exzenterdrehzentrum 12 einen veränderten Winkel α bezüglich der Transversachse 6 auf, die ihrerseits senkrecht zur optischen Achse 8 steht.

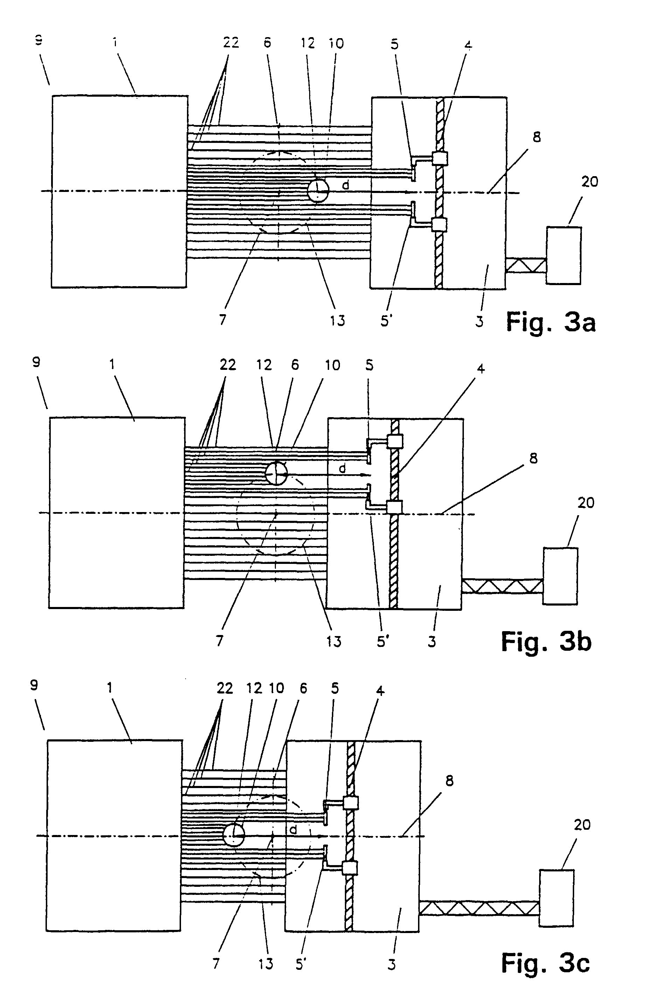

Fig. 2b zeigt eine Seitenansicht der Meßanordnung. Das Meßobjekt 2 wird drehbar zwischen den Drehmitteln 15 derart gelagert, daß eine Drehung in Drehrichtung 16 um die Drehachse 18 durchgeführt wird. Während der Rotation beschreibt die Exzenterdrehachse 19 und das Exzenterteil 10 eine zylindrische Bewegung um die Drehachse 18, damit eine zylinderförmige Fläche während einer Rotation des Exzenterteils überstrichen wird. Ein optisches Gehäuse 9 ist im Bereich des Exzenterteils 10 derart angeordnet, daß eine genaue Vermessung des Durchmessers bzw. der Rundheit des Exzenterdrehteils 10 durchgeführt werden kann. Eine Drehachse-Positionierungseinrichtung 21 stellt die Position des optischen Gehäuses 9 entlang der Drehachse 18 ein. Eine Winkelerfassungsvorrichtung 14 ist so angeordnet, daß die Winkellage bzw. der Drehwinkel α des rotierenden Exzenterteils in Echtzeit erfaßt wird. Die Meßebene 17, in der die Querschnitte gemäß Figuren 2a, 3a, 3b und 3c liegen, ist in Fig. 2b angedeutet.

Wird nun eine Messung in der Meßebene 17 durchgeführt, sind folgende Schritte gemäß Figuren 3a, 3b, 3c durchzuführen. Fig. 3a zeigt den Inhalt des optischen Gehäuses 9 mit einer Strahlenquelle 1, die das parallele Strahlenbündel 22 erzeugt. Während der Drehung des Meßobjekts beschreibt das Exzenterteil 10 einen Exzenterhubkreis 13 um das Drehzentrum 7 herum, wobei ein Abstand d, parallel zur optischen Achse 8, zwischen dem Exzenterdrehzentrum 12 und dem Detektor 5, 5' besteht. In Fig. 3a befindet sich während der Drehung das Exzenterdrehzentrum 12 gerade auf der optischen Achse 8. Mittels der Transversachse-Positionierungseinrichtung 4 werden Detektoren 5, 5' der Detektionseinrichtung 3 so positioniert, daß das Schattenbild des Exzenterteils 10, das durch die Projektion des Strahlenbündels 22 erzeugt wird mit den Detektoren 5, 5' erfaßt wird. Die Detektoren 5, 5' sind dazu geeignet, die Strahlung der Strahlenquelle 1 und das Intensitätsprofil des Schattenbildes zu erfassen. Im Schatten des Exzenterteils 10 werden die Intensitätsmessungen des Detektors mit Ausnahme von einem möglichen kleinen Untergrundbeitrag Null. Außerhalb des Schattens entspricht die Intensität natürlich der vollständigen Intensität der Quelle. Demzufolge entsteht eine scharfe Intensitätsprofiländerung gerade an der Stelle, wo die Randprojektion des Meßobjekts auf der Detektorebene 5, 5' erzeugt wird. Der Abstand d wird mittels einer Hubeinrichtung 20, die weiter unten beschrieben wird, eingestellt.

Während der Rotation bewegt sich die Position des Exzenterteils beispielsweise bis auf die in Fig. 3b gezeigte Stelle. Bei der Fig. 3b befindet sich das drehende Exzenterteil gerade in vertikaler Lage, d.h., das Exzenterdrehzentrum 12 liegt auf der Transversachse 6. Wird nun mittels Transversachse-Positionierungseinrichtung 4 die Detektoren 5, 5' der Detektionseinrichtung 3 so eingestellt, daß die scharfe Intensitätsänderung des Schattenbildprofils erfaßt werden kann, wird ein dem Durchmesser des Meßobjekts entsprechendes Schattenbildprofil auf dem Detektor 5, 5' abgebildet. Nun hat die Winkellage a zwischen dem Exzenterzentrum 12 und der Transversachse 6 (siehe Fig. 2a) an dieser Stelle einen Wert von α = 0 und demzufolge hat sich das Exzenterdrehteil in Richtung auf die Strahlenquelle 1 bewegt. Hubeinrichtung 20 ist aber entsprechend eingestellt, damit die Detektionseinrichtung in Richtung Strahlenquelle derart verschoben wird, daß der Abstand d erhalten bzw. konstant bleibt. Auf diese Weise werden optische Verzerrungen anhand eines veränderbaren Abstandes zwischen Detektor und dem zu messenden Exzenterteils vermieden.

Wird nun gemäß Fig. 3c weiter gedreht, befindet sich das Exzenterteil 10 in einer Lage mit Drehwinkel α = 270°. Die Hubeinrichtung 20 sorgt dafür, daß die Stelle der Detektionseinrichtung derart Richtung Quelle verschoben wird, daß der Abstand d zwischen dem Exzenter-Drehzentrum 12 und dem Detektor 5 erhalten bleibt. Wird mittels der Transversachse-Positionierungseinrichtung 4 die Detektoranordnung 5, 5' derart geändert, daß das Schattenbild des Exzenterteils erfaßt werden kann, wird ein Meßergebnis gemäß Fig. 3c in Kombination mit Fig. 3a und 3b dafür benutzt, um drei Durchmesser-Messungen des Exzenterteils 10 zu erfassen und dabei auf diese Weise die Rundheit oder Exzentrizität zu überprüfen. Die Transversachse-Positionierungseinrichtung 4 ist auch dafür geeignet, den Abstand zwischen zwei Detektorteilen beispielsweise 5, 5' zu ändern, damit Objekte verschiedenster Durchmesser auch erfaßt werden können.

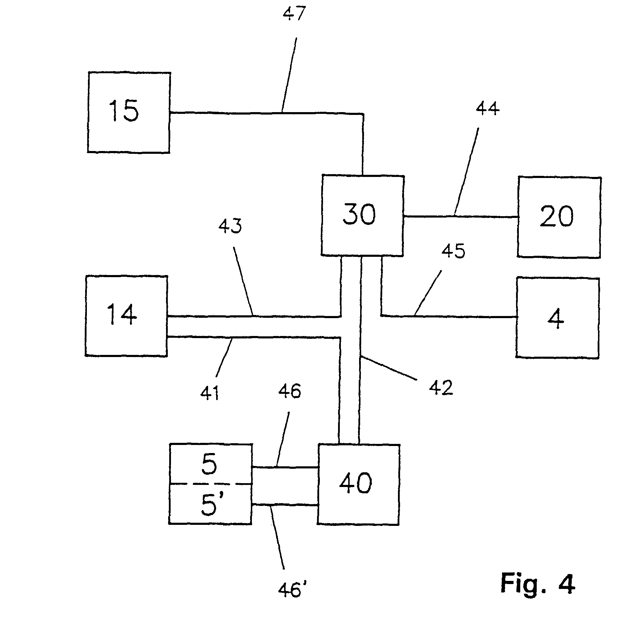

Fig. 4 beschreibt ein schematisches Diagramm der Zusammenarbeit und Kontrolle zwischen den verschiedenen Teilen des Systems. Die Synchronisierungseinrichtung 30 ist über Leitung 47 mit dem Drehmittel 15 wie auch über Leitung 43 mit der Winkelerfassungsvorrichtung 14 verbunden. Eine Verbindung 44 zwischen der Synchronisierungseinrichtung 30 und der Hubeinrichtung 20 sorgt dafür, daß die Hubeinrichtung derart eingestellt wird, daß der Abstand, parallel zur optischen Achse, zwischen dem Exzenterdrehteil und der Detektoranordnung konstant gehalten wird. Die Drehwinkelstelle wird mittels Winkelerfassungsvorrichtung 14 erfaßt. Weitere Verbindungen 45 und 42 zwischen der Synchronisierungseinrichtung und der Transversachse-Positionierungseinrichtung 4 bzw. dem Computer 40 sind in Fig. 4 gezeigt. Verbindung 45 erlaubt eine Synchronisierung der Transversachse-Positionierungseinrichtung 4 mit der Winkelerfassungsvorrichtung 14 damit eine Bewegung senkrecht zur optischen Achse, d.h. parallel zur Achse 6 auch mit der Drehung des Exzenterdrehteils synchronisiert werden könnte. Synchronisierungsinformation wird anhand Leitung 42 im Computer 40 gespeichert. Computer 40 speichert, steuert und wertet Informationsdaten aus. Über Leitung 41 wird die Drehwinkellage a gespeichert und über Leitungen 46 bzw. 46' wird das von dem Detektor 5, 5' erfaßte Intensitätsprofil des Schattenbilds ausgelesen bzw. gespeichert. Selbstverständlich sind weitere, an sich bekannte Verbindungen zwischen dem Computer 40 und den verschiedenen Teilen des Systems gemäß Figuren 2 bis 3c möglich, um eine Automatisierung des Meßvorgangs zu bewerkstelligen.

Mit dem Verfahren und der Vorrichtung gemäß der Erfindung ist es möglich, Durchmesserkontrolle und Durchmesser-Messungen mit Genauigkeiten von ca. 1 Mikrometer durchzuführen. Solche Messungen können beispielsweise an Meßobjekten mit Längen von zwischen 0 und 3000 mm und mit Durchmessern von zwischen 0 und 1000 mm durchgeführt werden. Die Messungen von Ezxenterdrehteilen können durchgeführt werden, beispielsweise Kurbelwellen. Die Detektoreinrichtung 5, 5' kann Fotozellen aufweisen, die mit einer optischen CCD-Kamera oder Laser-Scanner in Verbindung stehen. Mit einer Pixel-Auslesefrequenz von z.B. 10 MHz ist eine Abtastfrequenz von 5 KHz zu erwarten. Bei einer Neßobjekt-Rotationsfrequenz von 1 Hz sind 5000 Abtastungen pro Drehung möglich. Hubbewegungen des Exzenterdrehteils von beispielsweise ± 200 mm sind mit diesem Verfahren und mit dieser Vorrichtung zu erfassen.

## Patentansprüche

1. Verfahren zur Vermessung von Exzenterdrehteilen eines Meßobjektes, wobei das Meßobjekt drehbar gelagert ist und sich um eine Drehachse dreht und eine Meßebene senkrecht zur Drehachse definiert ist, worin das zu messende Teil des Meßobjekts mit einem von einer Strahlenquelle ausgehenden parallelen Strahlenbündel bestrahlt wird und die von dem Meßobjekt und der Strahlenquelle erzeugte Schattenbildprojektion eines in der Meßebene liegenden Querschnitts durch das Meßobjekt anhand einer Detektionseinrichtung erfaßt wird, dadurch gekennzeichnet, daß die Drehachseposition relativ zur Detektionseinrichtung ermittelt wird, daß die Meßebene derart eingestellt wird, daß sie das zu messende Exzenterdrehteil überschneidet, daß bei stationärer Detektionseinrichtung das maximale Auswandern eines Durchmessers des Exzenterdrehteils erfaßt wird, daß ein Drehwinkel des Exzenterdrehteils ermittelt wird, und daß die Detektionseinrichtung parallel zum Strahlenbündel so bewegt wird, daß der Abstand parallel zum Strahlenbündel zwischen der Detektionseinrichtung und dem rotierenden Exzenterdrehteil konstant bleibt.

2. Verfahren nach Anspruch 1, dadurch gekennzeichnet, daß die Vermessung von Kurbelwellen durchgeführt wird.

3. Verfahren nach Anspruch 2, dadurch gekennzeichnet, daß die Kurbelwellen eine Vielzahl von Exzenterdrehteilen mit einer Vielzahl von Drehwinkeln relativ zueinander aufweisen.

4. Vorrichtung zur Vermessung von Exzenterdrehteilen eines Meßobjektes mit einer drehbaren Lagevorrichtung, um das Meßobjekt drehbar zu verlagern, Mitteln zum Definieren einer senkrecht zur Drehachse liegenden Meßebene, einer Strahlenquelle, die ein in der Meßebene liegendes paralleles Strahlenbündel erzeugt, einer Detektionseinrichtung, die so angeordnet ist, daß sie das von der Strahlungsquelle ausgehende Strahlenbündel und die von dem Meßobjekt produzierte Schattenbildprojektion eines Meßobjektquerschnitts erfaßt und Mittel zur Positionierung der Meßebene, so daß sie das zu messende Exzenterdrehteil überschneidet, gekennzeichnet durch
eine Winkelerfassungsvorrichtung (14), um einen Drehwinkel (α) des Exzenterteils (10) zu ermitteln, eine Hubeinrichtung (20), die so ausgebildet ist, daß sie die Detektionseinrichtung (3) parallel zum Strahlenbündel (22) bewegen kann, eine Synchronisierungseinrichtung (30), die die Hubbewegung der Detektionseinrichtung (3) in Abhängigkeit vom erfaßten Drehwinkel (α) des Exzenterteils (10) mit der rotierenden Bewegung des Exzenterteils (10) synchronisiert, und einen Computer (40) zum Speichern, Steuern und Auswerten, wobei die Detektionseinrichtung (3) so bewegt wird, daß der Abstand (d) parallel zum Strahlenbündel zwischen der Detektionseinrichtung (3) und dem rotierenden Exzenterdrehteil (10) konstant bleibt.

5. Vorrichtung nach Anspruch 4, dadurch gekennzeichnet, daß die Vorrichtung derart ausgebildet ist, daB eine Kurbelwelle (2) vermessen wird.

6. Vorrichtung nach einem der Ansprüche 4 oder 5, dadurch gekennzeichnet, daß die Detektionseinrichtung (3) einen Detektor (5, 5') aufweist, der aus mindestens einer Fotodiodenzeile (5, 5') oder einem Laser-Scanner besteht.

7. Vorrichtung nach Anspruch 6, dadurch gekennzeichnet, daß die Detektionseinrichtung aus zwei Fotodioden-zeilen besteht und daß eine Positionierungseinrichtung (4) vorgesehen ist, um den Abstand zwischen den zwei Fotodiodenzeilen (5, 5') einzustellen.

8. Vorrichtung nach einem der Ansprüche 4 bis 7, dadurch gekennzeichnet, daß eine Positionierungseinrichtung (4) vorgesehen ist, um den Detektor (5, 5') in eine in der Meßebene (17) liegende zum Strahlenbündel (22) transversale Richtung zu positionieren.

## Claims

1. Method for measuring eccentric rotary parts of a device under test, the device under test being mounted rotatably and rotating about an axis of rotation, and a measuring plane being defined perpendicular to the axis of rotation, wherein the part of the device under test which is to be measured is irradiated by a parallel beam emanating from a radiation source, and the detection device is used to detect the shadowgraph projection, generated by the device under test and the radiation source, of a cross section, situated in the measuring plane, through the device under test, characterized in that the position of the axis of rotation is determined relative to the detection device (3), in that the measuring plane (17) is positioned such that it intersects the eccentric rotary part (10) to be measured, in that, in the case of a stationary detection device (3), the maximum migration of a diameter of the eccentric rotary part (10) is detected, in that an angle of rotation (α) of the eccentric rotary part (10) is determined, and in that the detection device (3) is moved parallel to the beam (22) such that the spacing (d) parallel to the beam (22) remains constant between the detection device (3) and the rotating eccentric rotary part (10).

2. Method according to Claim 1, characterized in that measurement of crankshafts is carried out.

3. Method according to Claim 2, characterized in that the crankshafts have a multiplicity of eccentric rotary parts (10) with a multiplicity of angles of rotation (α) relative to one another.

4. Device for measuring eccentric rotary parts of a device under test having a rotatable position device [sic] for the purpose of rotatably mounting the device under test, means for defining a measuring plane lying perpendicular to the axis of rotation, an irradiation source which generates a parallel beam situated in the measuring plane, a detection device which is arranged such that it detects the beam emanating from the radiation source and the shadowgraph projection, produced by the device under test, of a cross section of the device under test, and means for positioning the measuring plane such that it intersects the eccentric rotary part to be measured, characterized by an angle-detecting device (14) for determining an angle of rotation (α) of the eccentric part (10), a lifting device (20) which is constructed such that it can move the detection device (3) parallel to the beam (22), a synchronization device (30), which synchronizes the lifting movement of the detection device (3) as a function of the detected angle of rotation (α) of the eccentric part (10) with the rotating movement of the eccentric part (10), and a computer (40) for storing, controlling and evaluating, the detection device (3) being moved such that the spacing (d) parallel to the beam remains constant between the detection device (3) and the rotating eccentric rotary part (10).

5. Device according to Claim 4, characterized in that the device is constructed in such a way that a crankshaft (2) is measured.

6. Device according to one of Claims 4 or 5, characterized in that the detection device (3) has a detector (5, 5') which comprises at least one row of photodiodes (5, 5') or a laser scanner.

7. Device according to Claim 6, characterized in that the detection device (3) comprises two rows of photodiodes (5, 5') and in that a positioning device (4) is provided for the purpose of setting the spacing between the two rows of photodiodes (5, 5').

8. Device according to one of Claims 4 to 7, characterized in that a positioning device (4) is provided for the purpose of positioning the detector (5, 5') in the direction lying in the measuring plane (17) and transverse to the beam (22).

## Revendications

1. Procédé de mesure d'éléments de rotation excentriques d'un objet à mesurer, l'objet à mesurer étant monté à rotation et tournant autour d'un axe de rotation et un plan de mesure perpendiculaire à l'axe de rotation étant défini, dans lequel l'élément à mesurer de l'objet à mesurer est exposé à un faisceau de rayons parallèles issus d'une source de rayonnement, et la projection de la silhouette produite par l'objet à mesurer et la source de rayonnement, d'une section transversale à travers l'objet à mesurer se trouvant dans le plan de mesure est détectée au moyen d'un dispositif de détection, caractérisé en ce que
la position de l'axe de rotation est déterminée par rapport au dispositif de détection (3),
en ce que le plan de mesure (17) est ajusté de telle sorte qu'il coupe l'élément de rotation excentrique (10) à mesurer,
en ce que pour un dispositif de détection stationnaire (3), on détermine la dérive maximale d'un diamètre de l'élément de rotation excentrique (10),
en ce qu'un angle de rotation (α) de l'élément de rotation excentrique (10) est déterminé, et
en ce que le dispositif de détection (3) est déplacé parallèlement au faisceau de rayons (22) de telle sorte que la distance (d) parallèlement au faisceau de rayons (22) entre le dispositif de détection (3) et l'élément de rotation excentrique (10) en rotation reste constante.

2. Procédé selon la revendication 1, caractérisé en ce que l'on réalise la mesure des vilebrequins.

3. Procédé selon la revendication 2, caractérisé en ce que les vilebrequins présentent une pluralité d'éléments de rotation excentriques (10) ayant une pluralité d'angles de rotation (α) les uns par rapport aux autres.

4. Dispositif de mesure d'éléments de rotation excentriques d'un objet à mesurer, comprenant un dispositif de positionnement rotatif, afin de monter l'objet à mesurer de manière à ce qu'il puisse tourner, des moyens pour définir un plan de mesure perpendiculaire à l'axe de rotation, une source de rayonnement, qui produit un faisceau de rayons parallèles dans le plan de mesure, un dispositif de détection, qui est disposé de telle sorte qu'il détecte le faisceau de rayons issu de la source de rayonnement et la projection de la silhouette d'une section transversale de l'objet à mesurer produite par l'objet à mesurer et des moyens de positionnement du plan de mesure, de sorte que ce dernier coupe l'élément de rotation excentrique à mesurer, caractérisé par un dispositif de détection d'angle (14), afin de déterminer un angle de rotation (α) de l'élément de rotation excentrique (10), un dispositif de levage (20) qui est conçu de telle sorte que le dispositif de détection (3) puisse se déplacer parallèlement au faisceau de rayons (22), un dispositif de synchronisation (30) qui synchronise le mouvement de levage du dispositif de détection (3) en fonction de l'angle de rotation (α) détecté de l'élément excentrique (10) avec le mouvement de rotation de l'élément excentrique (10), et un ordinateur (40) pour mémoriser, commander et évaluer, le dispositif de détection (3) étant déplacé de telle sorte que la distance (d) parallèlement au faisceau de rayons entre le dispositif de détection (3) et l'élément de rotation excentrique en rotation (10) reste constante.

5. Dispositif selon la revendication 4, caractérisé en ce que le dispositif est conçu de telle sorte que l'on puisse mesurer un vilebrequin (2).

6. Dispositif selon l'une quelconque des revendications 4 ou 5, caractérisé en ce que le dispositif de détection (3) présente un détecteur (5, 5'), qui se compose d'au moins une rangée de diodes photoluminescentes (5, 5') ou d'un scanner laser.

7. Dispositif selon la revendication 6, caractérisé en ce que le dispositif de détection (3) se compose de deux rangées de diodes photoluminescentes (5, 5') et qu'un dispositif de positionnement (4) est prévu pour ajuster la distance entre les deux rangées de diodes photoluminescentes (5, 5').

8. Dispositif selon l'une quelconque des revendications 4 à 7, caractérisé en ce qu'un dispositif de positionnement (4) est prévu pour positionner le détecteur (5, 5') dans une direction transversale au faisceau de rayons (22), se trouvant dans le plan de mesure (17).
